# EUROPÄISCHE PATENTANMELDUNG

(11) **EP 0 611 938 A1**
(43) Veröffentlichungstag der Anmeldung: **24.08.1994**
(21) Anmeldenummer: 94102092.7
(22) Anmeldetag: 10.02.1994
(51) Int. Cl.: F27D 1/00, C22C 19/05, C22C 38/18, F27D 5/00

(54) **Brenngutträger für keramische Formlinge**

(30) Priorität: 10.02.1993 DE 4303724
(71) Anmelder: Robert Thomas Metall- und Elektrowerke, 57290 Neunkirchen (DE)
(72) Erfinder: Bernhardt, Thomas, D-57290 Neunkirchen (DE)
(74) Vertreter: Grosse, Dietrich, Dipl.-Ing.

(57) **Zusammenfassung**

Träger zur Aufnahme und Abstützung von keramischen Formlingen während des Brenn- und ggfs. Trockenprozesses sollen so ausgestaltet sein, daß bei erträglichem Gestehungsaufwand eine lange Standzeit sowie im Interesse der Senkung des Energiebedarfs eine geringe thermische Kapazität vorliegt. Dazu wird vorgeschlagen, daß der Träger aus Blechen aus einer Nickel-Chrom-Eisenlegierung erstellt ist, die 20 bis 35% Cr, 1 bis 20% Fe und 40 bis 75% Ni sowie ggfs. weitere Legierungselemente enthält.

## Beschreibung

Die Erfindung betrifft einen Träger zur Aufnahme und Abstützung von keramischen Formlingen während des Brenn- und gegebenenfalls Trokkenprozesses.

Es ist bekannt, keramische Formlinge, insbesondere Dachziegel, während des Trocknens in unterschiedlichen Bereichen mit der Form des Formlings angepaßten Niveaus abzustützen, um ein Verziehen der Formlinge während des Trockenvorganges zu unterbinden. Ein derartiges Trocknen kann bei Temperaturen bis zu 130 °C stattfinden, und verbreitet wurden aus Holz bestehende Trockenrähmchen benutzt (DE-GM 77 04 396), während der höheren Stabilität und damit längeren Standdauer später vorwiegend aus verzinktem Stahlblech zusammengefügte Trockengutträger benutzt wurden (DE-GM 18 06 455). Auch aus Metallguß, bspw. Leichtmetallguß, hergestellte Rähmchen wurden bekannt, wie es aus der DE-PS 1 265 019 ersichtlich ist. Aus dieser geht auch bereits die Auflage der einzelnen Rähmchen auf eine Anzahl solcher Rähmchen fassenden Träger hervor, und aus der DE-GM 82 29 196.9 ist die integrierte Konstruktion von Blechrahmen aufweisenden Blechträgern bekannt.

Eine Abstützung keramischer Formlinge ist zumindest bei hohen Qualitätsansprüchen auch während des Brennprozesses erforderlich. Der hohen Brenntemperatur von bspw. 1050°C wegen lassen sich jedoch Holz und Stahlblech nicht verwenden, so daß Brenngutträger der hohen Temperaturen wegen, denen sie während des Brennvorganges ausgesetzt sind, aus keramischen Werkstoffen gefertigt werden. Damit wird nicht nur die geforderte Temperaturbeständigkeit erreicht, zur Vermeidung von Ausschuß während des Brennvorganges ist es auch erforderlich, die Formlinge exakt abzustützen, so daß auch eine Formbeständigkeit innerhalb enger Toleranzen gefordert wird. Derartige keramische Brenngutträger - ihrer Form wegen auch U- bzw. H-Kassetten genannt - werden zur praktischen Verwendung auf Wagen aufgebracht, mit denen sie in den Brennofen eingefahren bzw. durch diesen gefahren werden, und auf diesen Wagen sind sie zu bspw. 10 bis 15 Stück übereinandergestapelt. Als nachteilig hat sich hierbei zunächst erwiesen, daß derartige keramische Brennkassetten beim Aufheizen selbst hohe Energien aufnehmen und damit die Brennzeit verlängern sowie hohe energiekosten verursachen. Auch beim späteren Abkühlen sind entsprechend hohe Wärmeenergien abzuführen. Weiterhin macht sich nachteilig der hohe mechanische sowie thermische Verschleiß bemerkbar. Da der exakten und stabilen Abstützung wegen sowie wegen der Einsturzgefahr von Kassettenstapeln derartige Brennkassetten bereits beim Auftreten der ersten Risse auszuscheiden sind, ergibt sich eine nur unbefriedigende Standzeit von im Mittel bspw. 500 Brennzyklen bzw. 3 Jahren, nach denen solche keramischen Brennkassetten auszuscheiden und durch neue zu ersetzen sind.

Man hat daher versucht, auch Brenngutträger aus Metall herzustellen. Hierbei zeigte es sich jedoch, daß bei den meisten Metallen der Schmelzpunkt zu niedrig lag, aber auch darüber hinaus zeigen viele Metalle bei hohen Temperaturen eine unzulässig hohe Verzunderung, so daß die Oberfläche rauh wird und auch Masseverluste auftreten. Des weiteren ist zu beachten, daß viele Metalle zu einer stärkeren Verzunderung unter Einfluß des im Brennofen vorhandenen Rauchgases neigen. Weiterhin erweist sich bei vielen Metallen deren Dehnung unter Wärmeeinfluß als nachteilig groß, da keramische Formlinge beim Brennen bzw. Sintern schwinden. Zusätzlich zeigen Metalle bei hohen Temperaturen eine geringe Formbeständigkeit und neigen insbesondere unter mechanischen Belastungen zu bleibenden Verformungen wie z.B. Durchbiegen bzw. Knicken, aber auch zu Rückverformungen und dergleichen.

Nun gibt es Metalle mit die Brenntemperatur überschreitendem Schmelzpunkt, der bspw. für Nickel bis 1455 °C liegt, für Titan bei 1668 °C, Osmium 2700 °C und Wolfram 3390 °C, und auch aus dem Turbinenbau sind hochwarmfeste Legierungen bekannt, die jedoch, wie bspw. Titan, Osmium und Wolfram, für den vorliegenden Anwendungszweck zu teuer sind.

Die Erfindung geht daher von der Aufgabe aus, einen Brenngutträger der beschriebenen Gattung zu schaffen, der bei erträglichem Gestehungsaufwand eine lange Standzeit sowie im Interesse der Senkung des Energiebedarfs eine geringe thermische Kapazität aufweist.

Gelöst wird diese Aufgabe mit den kennzeichnenden Merkmalen des Patentanspruches 1 oder 3. Sie lehren die Erstellung auch eines Brenngutträgers aus Metallblechen, wobei durch eine wesentliche Chromanteile und Eisen sowie geringe Mengen von Kohlenstoff, Aluminium und zweckmäßig auch Titan, Yttrium und Zirkonium aufweisende Nickellegierung Metallblech mit einer ausreichenden Hochtemperatur-Festigkeit ebenso erreicht werden wie eine hohe Oxidationsbeständigkeit und Zunderresistenz auch in aufkohlenden Medien bzw. leicht reduzierender Atmosphäre bei hohen Temperaturen. Der Patentanspruch 3 gibt zur Erstellung der Bleche eine ebenfalls hochwarmfeste Metallegierung hoher Oxidationsbeständigkeit und Zunderresistenz an, die als Eisen-Chrom-Aluminium-Legierung ausgelegt ist und gegebenenfalls weitere Legierungselemente enthält.

Die Festigkeit wird unterstützt durch die Anwendung von aus Blechprofilen erstellten Flanken, die U-förmig profiliert sind, wobei die Gurte durch ausgeklinkte bzw. ausgekröpfte Zungen gegeneinander abgestützt werden. Als wesentlich insbesondere zur Unterbindung von Rückverformungen und von unerwünschten Rekristallisierungseffekten hat es sich gezeigt, die Abkantungen der den Träger bildenden Bleche mit großem, mindestens die Stärke der Bleche überschreitenden Krümmungsradius auszuführen.

Vorteilhafte und zweckmäßige Weiterbildungen der Erfindung sind in den Unteransprüchen gekennzeichnet.

Im einzelnen sind die Merkmale der Erfindung anhand der folgenden Beschreibung von Ausführungsbeispielen in Verbindung mit diese darstellenden Zeichnungen erläutert. Es zeigen hierbei:
- Figur 1: eine Aufsicht auf eine Brennkassette,
- Figur 2: die Frontansicht der Brennkassette der Fig. 1,
- Figur 3: einen Schnitt entlang der Ebene III der Fig. 1,
- Figur 4: eine Abwicklung der Flanken der Brennkassette der Fig. 1, und
- Figuren 5: Abwicklungen der sich zwischen den Flanken der Brennkassette der Fig. 1 erstreckenden Brücken,
- Figur 6: eine Aufsicht auf ein weiteres Ausführungsbeispiel einer Brennkassette,

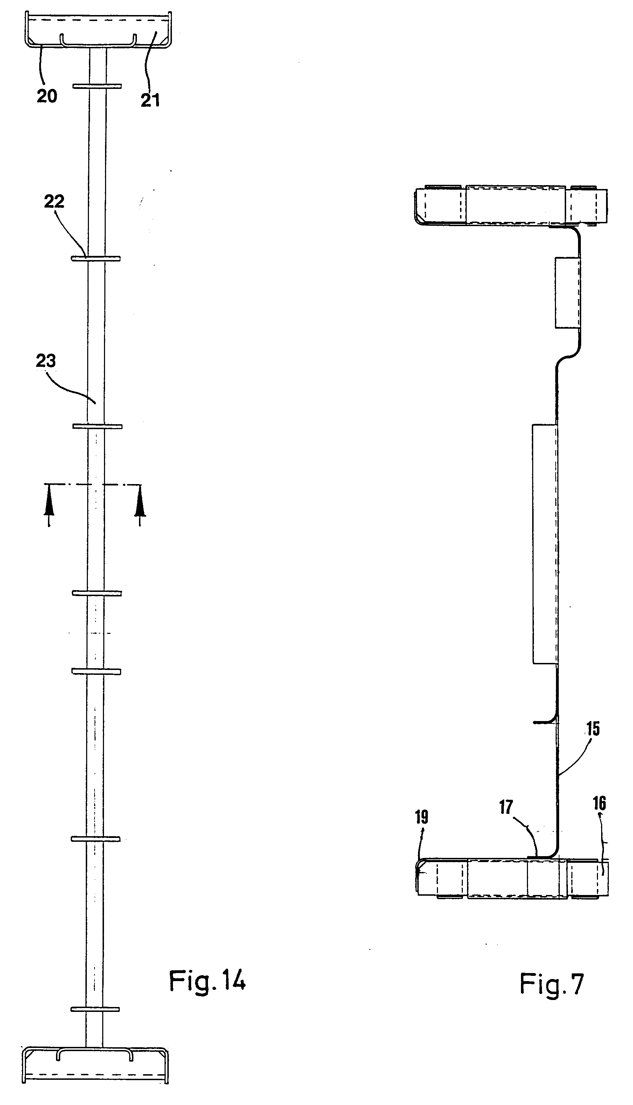

- Fign. 7 u. 8: Querschnitte durch die Brennkassette der Fig. 6,

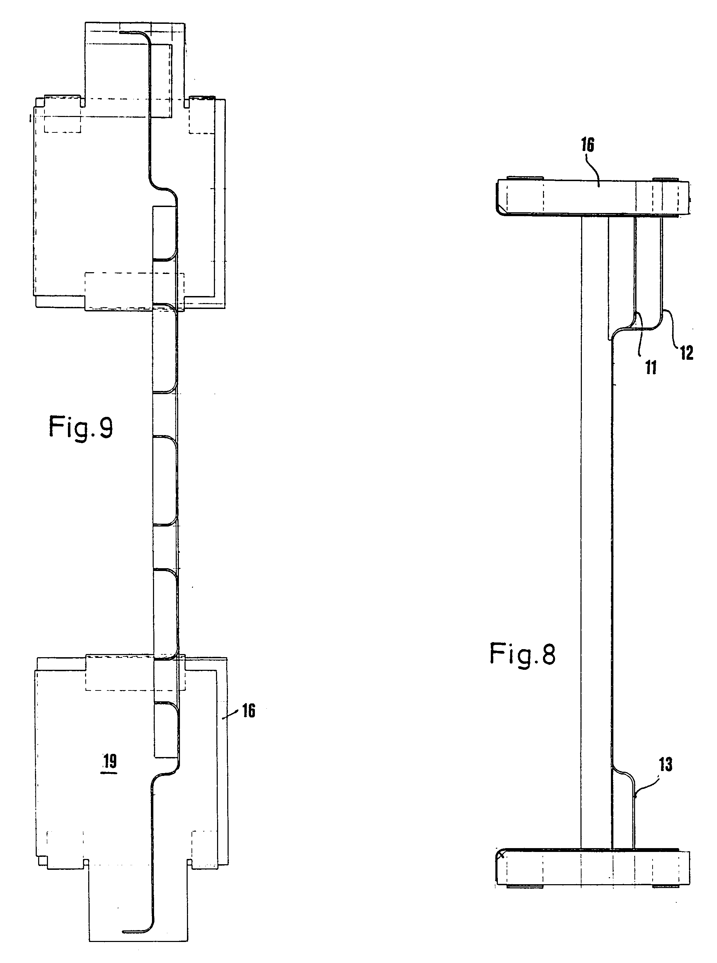

- Figur 9: einen Längsschnitt durch die Brennkassette der Fig. 6,
- Figur 10: eine hälftige, bis zur Symmetrieebene einer symmetrischen, aus Metallblech erstellten Brennkassette geführte Aufsicht,
- Figur 11: einen entlang der Symmetrieebene der Fig. 10 geführten Längsschnitt der dort dargestellten Brennkassette,
- Figur 12: die bis zu einer Symmetrieebene geführte Aufsicht auf eine weitere, symmetrisch ausgebildete Brennkassette,
- Figur 13: einen entlang der Symmetrieebene geführten Längsschnitt der Brennkassette der Fig. 12,
- Figur 14: eine Stirnansicht einer Brennkassette gemäß Fig. 12,
- Figur 15: die Aufsicht auf eine zur Auflage von vier Biberziegeln ausgelegten, gitterartig aus Hutprofilen zusammengestellten Brennkassette,
- Figur 16: eine Seitenansicht der Brennkassette der Fig. 15,
- Figur 17: die Hälfte einer Seitenansicht einer weiteren Brennkassette, und
- Figur 18: nach einem Längsträgerpaar abgebrochen eine Stirnansicht der Brennkassette nach Fig. 17.

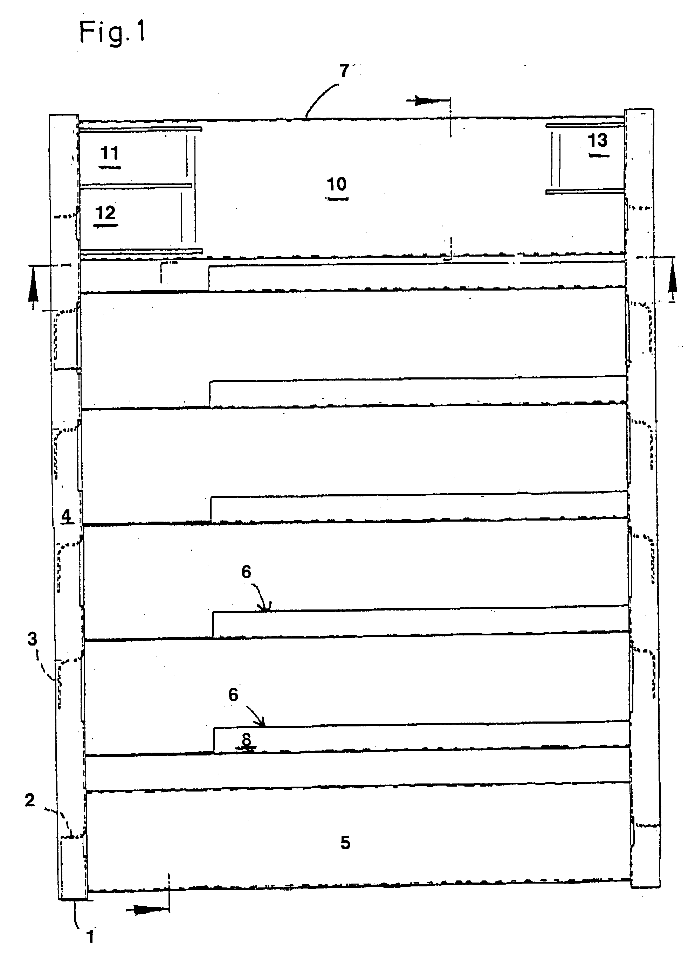

In Fig. 1 ist die Aufsicht auf eine Brennkassette dargestellt, deren Flanken durch U-förmige Längsprofile 1 gebildet werden, deren Joche einander zugewandt sind, so daß diese Profile nach außen hin geöffnet sind. Aus den Jochen dieser Längsprofile 1 sind Zungen 2 und 3 freigestanzt, wobei die relativ kurzen Zungen 2 in Richtung der Schenkel 4 rechtwinklig abgekantet sind und sich fast über deren gesamte Breite erstrecken, während die längeren Zungen 3 freigeklinkt sind und sich im Bereiche der freien Enden der Joche parallel zu diesen erstrecken. Damit sind die Schenkel 4 der Längsprofile gegeneinander abgestützt und gegen Verformungen durch von außen auf die Brennkassetten einwirkenden Kräfte weitgehend geschützt. Um Verformungen, insbesondere Rückverformungen im Bereiche der Kanten unter Einwirkung der durch die Brennprozesse bewirkten thermischen Belastungen zu vermeiden, sind, wie auch bei den übrigen Teilen der Brennkassette, alle Abkantungen mit relativ großem Radius, bspw. einem Krümmungsradius von 4 bis 5 mm, ausgeführt. Damit werden im Abkant- bzw. Biegebereich stärkere Dehnungen bzw. Stauchungen vermieden, die zu Kristallverformungen und damit bei anschließender Erhitzung zu Gefügeänderungen durch Rekristallisation und damit zu Festigkeitsverminderungen führen. Auf keinen Fall jedoch sollten Krümmungsradien verwendet werden, welche die Blechstärke unterschreiten.

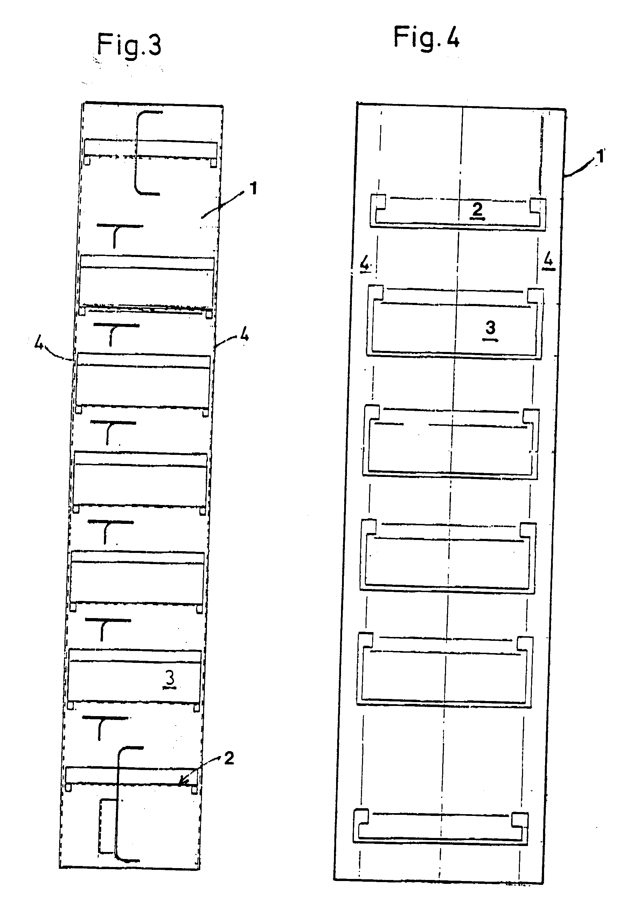

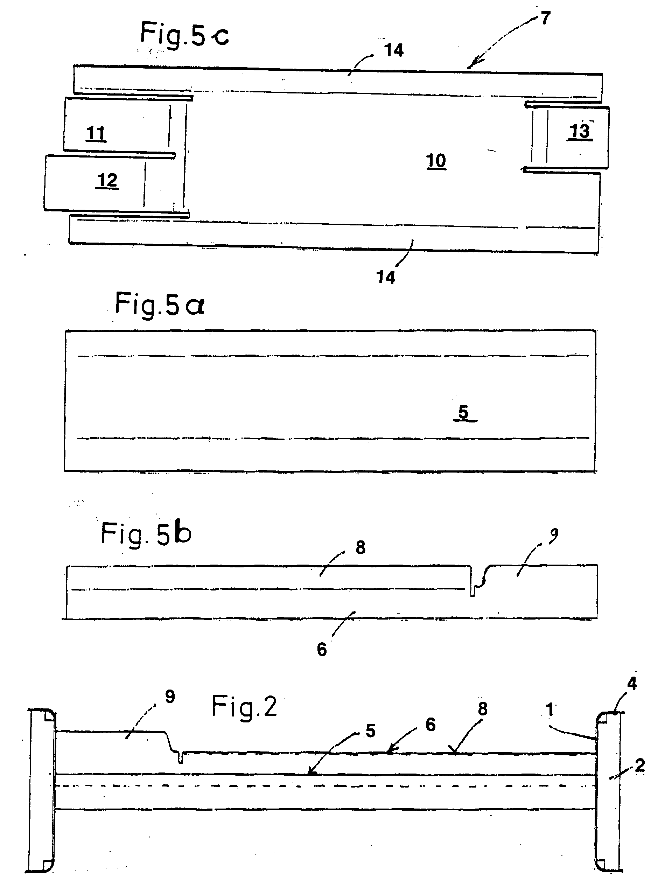

Die Längsprofile 1 sind durch eine Anzahl von die eigentliche Abstützung aufzubringender Formlinge bewirkende Traversen brückenartig miteinander verbunden. Hierbei ist die Traverse 5 zur Schaffung gleich hoher Stützniveaus, wie auch der Querschnitt der Fig. 4 zeigt, als U-Profil ausgebildet, und bei der Herstellung wird der in Fig. 5a gezeigte Zuschnitt entlang der eingezeichneten Striche gebogen, so daß der Mittelteil als ein zwei nach unten gerichtete Schenkel aufweisendes Joch stehenbleibt.

Die folgenden Traversen 6 sind praktisch gleichartig ausgebildet. Beim Zuschnitt der Fig. 5b wird ein Randstreifen 8 entlang der eingezeichneten Linie abgebogen, so daß er eine relativ tiefliegende Abstützung größerer Auflagefläche bildet, während der Vorsprung 9 ein höheres Auflageniveau schafft.

Die Traverse 7 entsteht aus dem Zuschnitt der Fig. 5c. Hier sind aus dem Joch 10 Streifen 11 bis 13 unterschiedlicher Länge freigestanzt. Vom Joch 10 werden zur Fertigstellung der Traverse beidseitig Randbereiche 14 als Schenkel eines U-Profiles mit dem erwähnten großen Radius abgekantet, und die Streifen 11 bis 13 werden durch zweifache Abkantung in jeweils ein höheres Niveau gekröpft. Die Wurzeln der Streifen 11 und 12 werden durch eine gemeinsame Grundbiegung in eine steil verlaufende Ebene überführt, aus der die Streifen 11 und 12 nach unterschiedlich langem Schrägverlauf in die Horizontale zurückgebogen sind. Nach dem Aufbiegen schließen die Stirnflächen der Streifen 11 bis 13 in der die Enden des Joches 10 und der Randbereiche 14 aufweisenden Vertikalebene ab.

Im Ausführungsbeispiel sind die Traversen 5 bis 7 mit den Jochen der Längsprofile 1 verschweißt. Es besteht aber auch die Möglichkeit, die Traversen mit Schlitze der Joche der Längsprofile 1 durchgreifenden Laschen auszustatten und die Verbindung durch Abkanten oder Verdrehen der Laschen herzustellen und gegebenenfalls durch Überschweißen zu sichern. Beim Schweißen haben sich insbesondere das WIG-Schweißen, aber auch das Widerstands-Schweißen als Punkten oder Buckelschweißen bewährt.

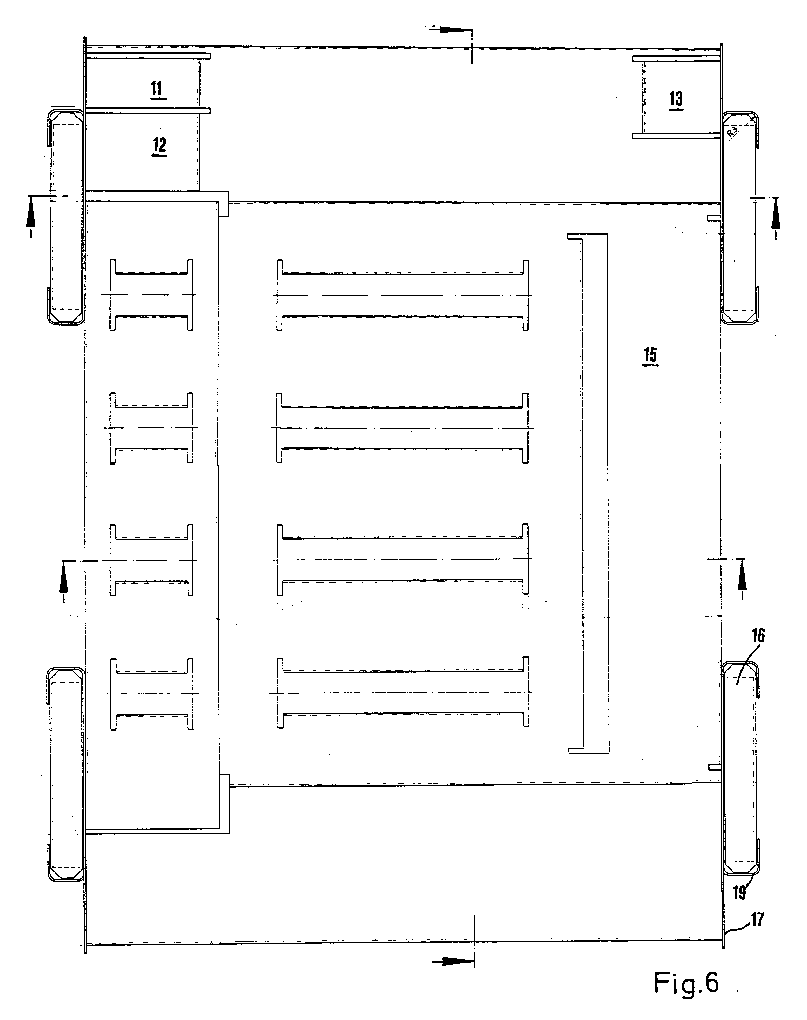

In Fig. 6 wird die Aufsicht auf eine Brennkassette gezeigt, deren wesentliche Teile wiederum aus Metallblechen gefertigt sind, die zu den als für hohe Temperaturen geeigneten Legierungen hergestellt sind, und aus denen zwar ausgeklinkte Streifen abgebogen sind, um Unterbrechungen der Auflagefläche zu schaffen und/oder als Versteifungen zu wirken: Auch hier jedoch sind derartige Metallstreifen nicht scharf abgekantet, sondern mit Krümmungsradien von mindestens der Stärke des verwendeten Bleches, besser 2 mm, oder 3 bis 5 mm, rechtwinklig abgebogen. Unterschiedliche Niveaus wiederum werden durch ausgebogene Streifen 11 bis 13 geschaffen sowie durch Abkantungen respektive Z-förmige Biegungen der Platine 15. Als wesentlich jedoch hat sich gezeigt, daß nicht nur die Platine zur Aufnahme von Lasten ausreichend zu versteifen ist: Die Gesamtlast einer Platine mit Ladung beruht auf seitlichen Stützen, und beim Übereinanderstapeln von Brennkassetten können hier erhebliche Belastungen auftreten. Bei der Anordnung nach Fig. 6 werden diese Kräfte im wesentlichen durch Keramikkörper 16 aufgenommen und übertragen, die als seitliche Stützen ausgebildet sind und durch Bleche gehalten sind. Derartige Bleche können, bspw. U-förmig mit an den Enden nach innen vorgesehenen Abbiegungen gestaltet sein und die Keramikkörper 16 allseitig oder wenigstens an fünf der sechs Flächen eines Quaders diese umgreifend ausgeführt sein, und es ist auch möglich, aus dem Material von abgebogenen Seitenstreifen Laschen 18 auszuklinken, welche die Keramikkörper umfassen. Auf jeden Fall sind hierbei die jeweils einen ZiegelaufnehmendenAuflageflächen aus hochwärmefesten Metallblechen gebildet, während die das Gewicht gegebenenfalls eines beladenen Stapels von Brennkassetten aufnehmenden seitlichen Stützen im wesentlichen durch Keramikkörper 16 gebildet sind. Auch hier ist es möglich, bspw. Seitenstreifen 17 nicht abzubiegen, sondern mit der Platine 15 zu verschweißen oder durch umgebogene, geschränkte oder vernietete Lappen miteinander zu verbinden, und ebenso ist es möglich, die Keramikkörper 16 abdeckenden Halterungen 19 aus solchen Randstreifen auszubilden oder sie getrennt zu erstellen und zusätzlich aufzubringen und zu verbinden.

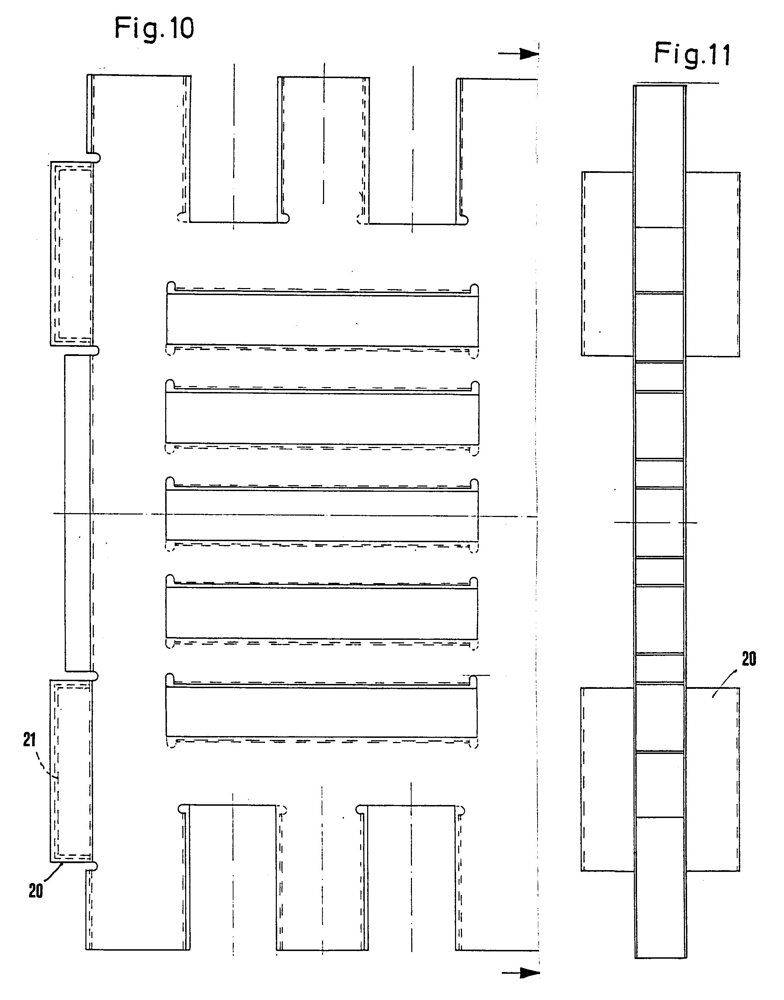

In Fig. 10 ist die Hälfte der Aufsicht einer weiteren Brennkassette dargestellt. Auch hier sind, wie auch der Längsschnitt nach Fig. 11 zeigt, zur Versteifung und/oder zur Schaffung von Durchbrüchen zur Aufnahme von Vorsprüngen der Ziegel Streifen ausgeklinkt und abgebogen, so daß sich ein Ober- und Untergurte aufweisendes Tragwerk erstellen läßt und angebogen oder zweckmäßig gesondert erstellt und angeschweißt sich als U-Körper erscheinende Stützen 20 ausgebildet sind, die durch zwischen deren oberer und unterer Horizontalfläche eingeschobene U-förmige Bleche 21 zur Übernahme der Lasten ausgesteift sind.

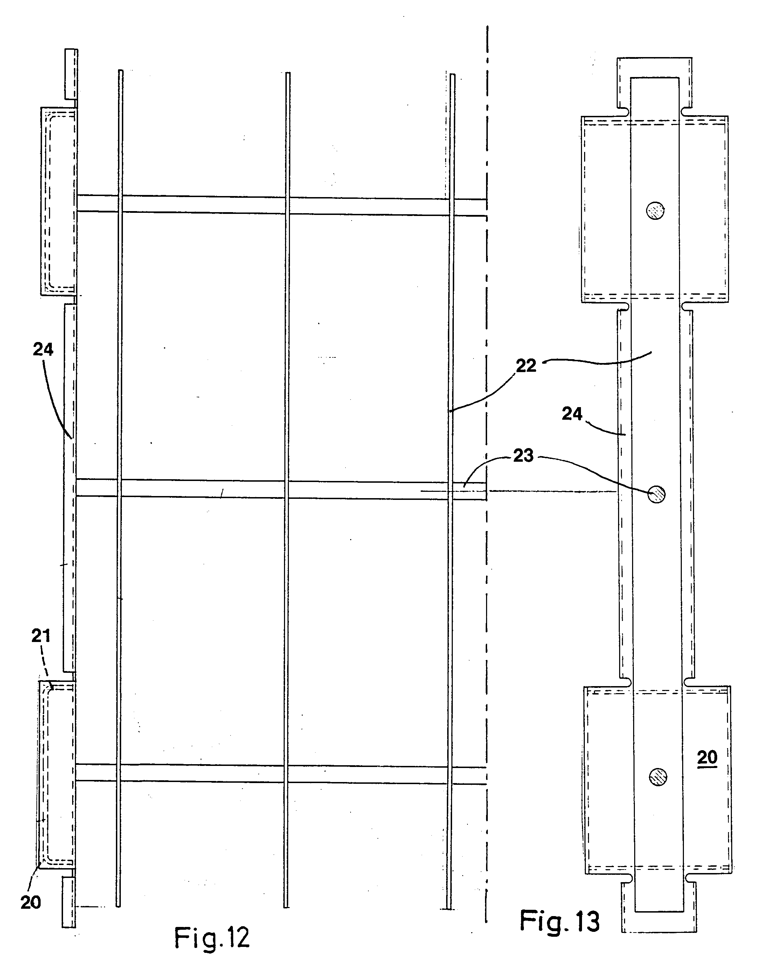

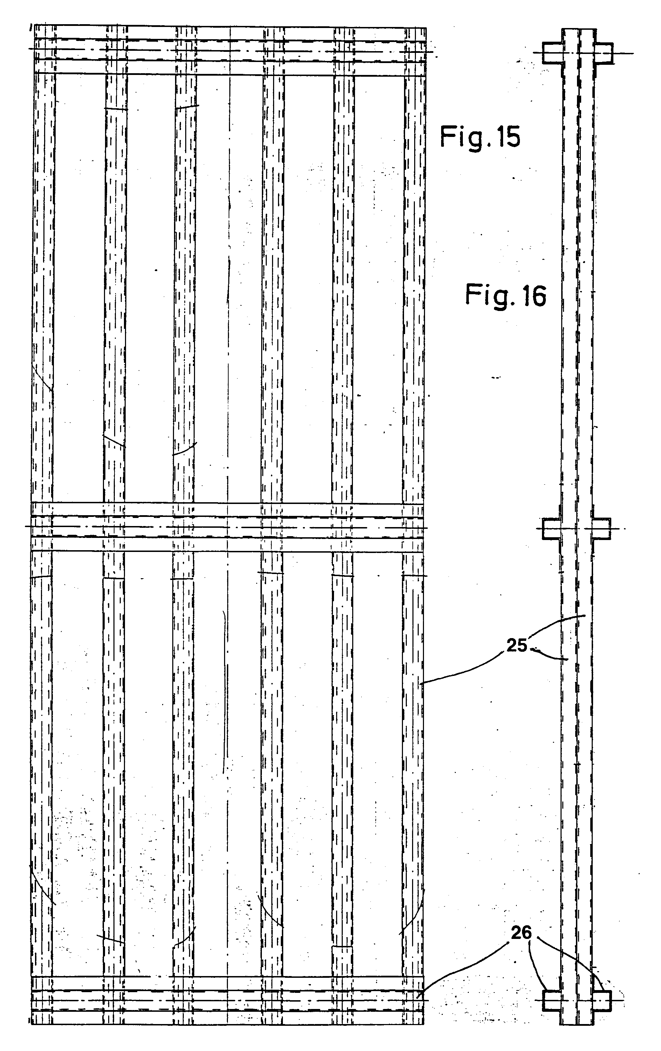

Eine weitere Variante ist in Fig. 12 mit halber Aufsicht dargestellt. Hier ist ein regelrechtes Gitter aufgezogen worden, das aus einzelnen Laschen 22 besteht, in die Bohrungen eingebracht sind, und die auf Rundstäbe 23 aufgebracht und mit diesen verbunden sind. Der Längsschnitt der Fig. 13 zeigt zusätzlich die weitere Aussteifung durch Flanken 24, die mit größerer Höhe ausgeführt sind als die Stege 22, und deren Ober- und Untergurte durch Abbiegungen in die Horizontale weiterhin versteift sind. Einstückig sind Stützen 20 abgebogen, die durch eingebrachte, U-förmige Bleche 21 weiter ausgesteift sind. Eine Stirnansicht der kompletten Anordnung ist in Fig. 14 gezeigt.

Derartige, als Gitter ausgeführte Brennkassetten lassen sich auch vermittels von Rechteck- bzw. Hutprofilen erstellen, wie die Aufsicht der Fig. 15 und die Seitenansicht der Fig. 16 zeigen. Gemäß Fig. 15 werden Vertikalstäbe eingesetzt, die entsprechend der Fig. 16 aus jeweils zwei Hutprofilen mit nach innen abgebogenen Endstreifen gebildet sind, und die jeweils paarweise, die Öffnungen einander zugewandt, direkt aufeinandergelegt sind und bspw. durch Schweißen der Fugen der aufeinanderliegenden Randbleche miteinander verbunden sind, während die Längsstäbe derart aus Hutprofilen 25 gebildet sind, werden als Querstäbe Hutprofile 26 mit nach außen abgebogenen Randstreifen an den Enden und mittig aufgeschweißt, so daß in Längsrichtung zwei Teil-Auflagebereiche entstehen, die so breit gehalten sind, daß wiederum je zwei Ziegel nebeneinander aufgelegt werden können und damit die gesamte Brennkassette zur Aufnahme von vier Biberziegeln geeignet ist.

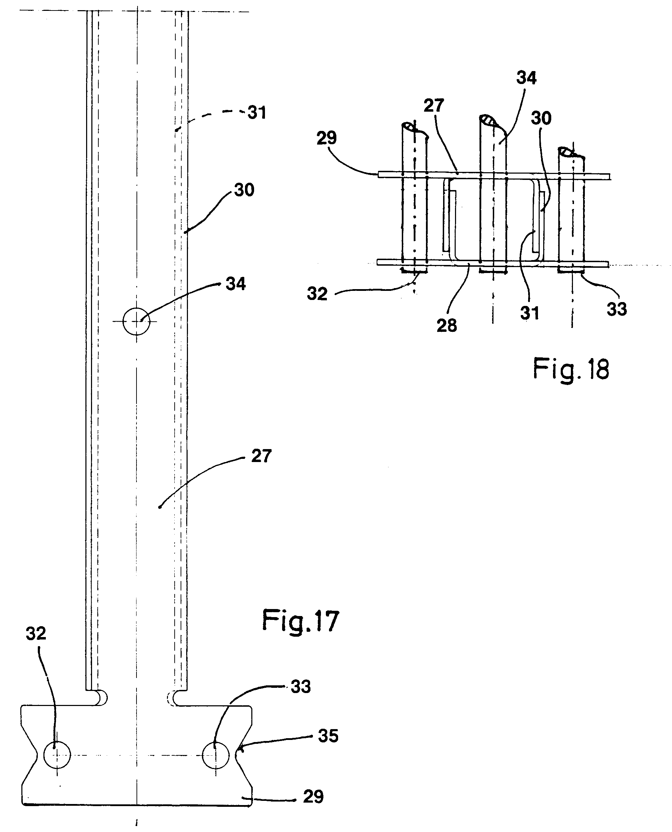

Eine weitere, gitterartig ausgebildete Brennkassette ist in der halben Seitenansicht in Fig. 17 und in einer nach einem Trägerpaar abgebrochenen Stirnansicht in Fig. 18 gezeigt. In Längsrichtung versteift ist die Brennkassette durch Träger 27, 28, die beidseitig mit in der ursprünglichen Ebene Stehengebliebenen Kopfstücken 29 ausgestattet sind, und deren kurz hinter den Kopfstücken beginnende Seitenstreifen 30, 31 als Schenkel zur Bildung jeweils eines U-Profiles abgebogen sind. Die Träger 27, 28 werden dann paarweise so zusammengesteckt, daß ihre Seitenstreifen einander umgreifen. Die Kantvorgänge werden hierbei vereinfacht, indem die stehengebliebenen Mittelteile die Seitenstreifen jeweils mit gleichen Maßen symmetrisch abgebogen erhalten, so daß beim Zusammenstecken jeweils die Seitenstreifen 30 eines der Träger 28 unter die Seitenstreifen 31 des zweiten Trägers 27 geraten. Die Träger 27, 28 sowie deren Kopfstücke 29 sind mit Bohrungen ausgestattet, durch die Stäbe, im Ausführungsbeispiel Rundstäbe 32 bis 34, geführt werden, welche die Trägerpaare in Querrichtung der Brennkassette miteinander verbinden. Vorgegebene Abstände werden eingehalten, wenn die Stäbe 32 bis 34 mit den von ihnen durchdrungenen Trägern 27, 28 durch Splinte oder Querbolzen, durch Verstemmen, durch Verschweißen oder dergleichen verbunden werden.

Beim Übereinanderstellen von Brennkassetten nach Fig. 17 und 18 legen sich die keilförmigen Ausnehmungen 35 einer der Kassetten jeweils auf Stäbe 32 der darunter befindlichen Kassette, während gleichzeitig Stäbe 33 sich in die keilförmigen Ausnehmungen 35 der Kopfstücke 29 der darunter liegenden Kassetten festsetzen. So wird eine saubere Auflage erreicht, die gegen Verschiebungen in Längsrichtung durch das Eingreifen der Stäbe 33 in Ausnehmungen 35 gesichert sind, und bei denen zu große Querverschiebungen durch einander Hintergreifen der Kopfstücke der einzelnen Brennkassetten vermieden werden.

Den Brennkassetten nach Fig. 10 bis 18 ist gemeinsam, daß sie im wesentlichen symmetrisch ausgeführt sind und sie daher auch um eine Längs- oder Querachse um 180° versetzt verwendbar sind. Damit aber werden erhebliche Vorteile gesichert. Beginnt eine solche Brennkassette bei hohen Brenntemperaturen unter Belastung, d.h. unter dem Gewicht aufgelegter Ziegel, sich duchzubiegen, so ist dieses ein Effekt, der mit der wachsenden Anzahl von Brennvorgängen zunimmt. Diesem Effekt aber läßt sich entgegenwirken, wenn bei merkbarer Durchbiegung nach einer Seite die Brennkassette beim nächsten Brennvorgang um 180° gewendet eingesetzt wird, so daß nunmehr bspw. die Träger 27, 28 der Fig. 17 und 18 etwas nach oben durchgewölbt sind und bei weiteren Verformungen unter Belastung bei hoher Temperatur sich nunmehr in die Gegenrichtung, d.h. zurück in Richtung auf die Ausgangsstellung, rückverformen. Auch hier wird an sich eine hohe Stabilität durch das eingangs empfohlene Material ebenso erreicht wie das Abkanten der Seitenstreifen 30, 31, die damit die Funktionen von Ober- und Untergurten übernehmen.

Im Bedarfsfalle können die Trägerpaare miteinander durch Schweißpunkte und mehr oder weniger lange bzw. durchgehende Schweißraupen miteinander verbunden werden, und darüber hinaus besteht selbstverständlich die Möglichkeit, erwünschte Verbindungen durch Nieten, gestanzte Lappen oder Schränken durchgreifender Lappen zu erwirken.

Unerwünschte oberflächliche Korrosionsvorgänge sowie eventuelle Verfärbungen des Brenngutes, wie sie durch Kontakt oder geringe Nähe von Metallen, insbesondere Chrom, bei hohem Temperaturpotential auftreten können, lassen sich gegebenenfalls durch Vorbehandeln bzw. Beschichten des Brenngutträgers oder mindestens Teilen desselben vermeiden oder mindestens erheblich mindern. So kann bspw. eine oberflächliche Aluminiumoxidschicht erzeugt oder aufgebracht werden, die einerseits eine relativ hohe Härte aufweist und andererseits fest haftet. Solche Schichten können bspw. durch Tauchen in Lösungen gegebenenfalls galvanisch aufgebracht werden, sie können aufgedampft werden und auch eine Beschichtung durch Plasmaspritzen ist möglich. Bewährt hat es sich auch bei anderen Beschichtungen, die zu beschichtenden Oberflächen bspw. durch Sandstrahlen aufzurauhen und zu reinigen oder, gegebenenfalls zusätzlich, zu beizen. Es ist möglich, Aluminium aufzutragen und die Oberfläche des Auftrages nachträglich zu oxidieren. Es ist auch möglich, Aluminium oder Aluminiumoxid unter vorgegebenem, vorzugsweise hohem SauerstoffPartialdruck aufzutragen, um eine stärkere bzw. durchgehende Oxidierung zu erreichen. Es besteht auch die Möglichkeit, Schutzschichten aus hochtemperaturbeständigen Suspersionen aufzutragen. Bewährt haben sich auch weitere Auftragungen anderer Substanzen, bspw. Yttriumoxid.

Die zum Aufbau metallischer Brenngutträger erforderlichen thermisch hochbeanspruchbaren Legierungen erweisen sich zwar als relativ kostspielig, die insgesamt erzielbare Lebensdauer dieser Brenngutträger rechtfertigen jedoch den Aufwand derartiger Metallegierungen, da die Gebrauchsdauer einer solchen Brennkassette wesentlich mehr Brennzyklen zuläßt als übliche, rein keramisch gefertigte Brenngutträger. Darüber hinaus macht sich vorteilhaft bemerkbar, daß die zu erwärmenden Massen wesentlich geringer sind als bei den üblichen, massiven keramischen Brennkassetten sowie die spezifische Wärme der hierfür verwendeten Metalle die von Keramik wesentlich unterschreitet. Ferner ist der Zugriff der heißen Gase zu den zu brennenden Ziegeln wesentlich direkter als bei den üblichen keramischen Brennkassetten, so daß sich beim Brennen auch sowohl ein wesentlich reduzierter Brennstoffverbrauch ergibt als auch kürzere Brennzyklen ermöglicht werden. Als vorteilhaft macht sich auch bemerkbar, daß mittels der gleichen Brenngutträger und ohne Umladung gegebenenfalls sowohl der Trocken- als auch der Brennvorgang vorgenommen werden können, wobei das Entfallen des Umladens nicht nur eine Zeitersparnis sowie den Verzicht auf kostspielige Umlademaschinen zuläßt, auch durch das Umladen ermöglichte Beschädigungen des Brenngutes werden vermieden.

## Patentansprüche

1. Träger zur zur Aufnahme und Abstützung von keramischen Formlingen während des Brenn- und gegebenenfalls Trockenprozesses,
**dadurch gekennzeichnet,**
daß der Träger aus Blechen aus einer Nickel-Chrom-Eisenlegierung erstellt ist, die 20 bis 35% Cr, 1 bis 20% Fe und 40 bis 75% Ni sowie ggfs. weitere Legierungselemente enthält.

2. Träger nach Anspruch 2,
**dadurch gekennzeichnet,**
daß die Nickel-Chrom-Eisenlegierung 20 bis 28 % Cr, 1 bis 12 % Fe bei einem Kohlenstoffgehalt von 0,1 bis 0,3 % aufweist, die 1 bis 3 % Al enthält, und der in jeweils 0,5 % unterschreitenden Mengen Ti, Y und Zr beigegeben sind, der in 1 % unterschreitenden Mengen Mn, Si und Cu sowie bis 10% Mo beigefügt sein können, und deren Rest aus Ni besteht.

3. Träger zum Aufnehmen und Abstützen von keramischen Formlingen während des Brenn- und gegebenenfalls Trockenprozesses,
**dadurch gekennzeichnet,**
daß der Träger aus Blechen einer Eisen-Chrom-Aluminium-Legierung erstellt ist, die 16 bis 30% Cr, 60 bis 80% Fe und 3 bis 8% Al sowie gegebenenfalls weitere Legierungselemente enthält.

4. Träger nach Anspruch 3,
**dadurch gekennzeichnet,**
daß die Legierung bis 1% Y₂O₃ und/oder Ti enthält.

5. Träger nach einem der Ansprüche 1 bis 4,
**dadurch gekennzeichnet,**
daß Abkantungen der die Brennkassette bildenden Bleche (Platine 15, Flanken 24) mit großem, die Stärke der Bleche überschreitenden Krümmungsradius ausgeführt sind.

6. Träger nach einem der Ansprüche 1 bis 4,
**dadurch hgekennzeichnet,**
daß Abkantungen der die Brennkassette bildenden Bleche (Platine 15, Flanken 24) mit großem, 2 mm überschreitenden Krümmungsradius ausgeführt sind.

7. Träger nach einem der Ansprüche 1 bis 4,
**dadurch gekennzeichnet,**
daß Abkantungen der die Brennkassette bildenden Bleche (Platine 15, Flanken 24) mit großem, 3 mm überschreitenden Krümmungsradius ausgeführt sind.

8. Träger nach mindestens einem der Ansprüche 1 bis 7,
**dadurch gekennzeichnet,**
daß Druckbelastungen ausgesetzte Bereiche mit Keramikkörpern (16) ausgestattet sind.

9. Träger nach Anspruch 8,
**dadurch gekennzeichnet,**
daß die das Gewicht aufnehmenden Stützen (20) der Brennkassette durch von Blechlaschen (18) gehaltene Keramikkörper (16) gebildet sind.

10. Träger nach mindestens einem der Ansprüche 1 bis 9,
**dadurch gekennzeichnet,**
daß U-förmig abgebogene, nach den Seiten geöffnete, aus Blech gebildete Längsprofile (1) die Flanken bilden, die durch den zu brennenden keramischen Formling in unterschiedlichen Ebenen abstützende Traversen (5 bis 7) miteinander verbunden sind.

11. Träger nach mindestens einem der Ansprüche 1 bis 10,
**dadurch gekennzeichnet,**
daß aus den Jochen der Längsprofile (1) ausgebogene und/oder ausgekröpfte Zungen (2, 3) deren Schenkel (4) gegeneinander abstützen.

12. Träger nach mindestens einem der Ansprüche 1 bis 11,
**dadurch gekennzeichnet,**
daß einander gegenüberliegende, insbesondere übereinander vorgesehene Blechstreifen (Schenkel 4) durch zwischen ihnen angeordnete, keramischen Körper gegeneinander abgestützt sind.

13. Träger nach mindestens einem der Ansprüche 1 bis 12,
**dadurch gekennzeichnet,**
daß Längsprofile (1) mehrere Gruppen von Traversen (5 bis 7) zur Aufnahme mehrerer hintereinander angeordneter keramischer Formlinge aufweisen.

14. Träger nach mindestens einem der Ansprüche 1 bis 13,
**dadurch gekennzeichnet,**
daß Traversen (5 bis 7) mit Jochen von Längsprofilen (1) verschweißt sind.

15. Träger nach mindestens einem der Ansprüche 1 bis 14,
**dadurch gekennzeichnet,**
daß sie zu einem Gitter zusammengefügte Längs- und Querstäbe (22, 23; 25, 26) aufweisen.

16. Träger nach mindestens einem der Ansprüche 1 bis 15,
**gekennzeichnet durch**
als Längs- oder Querstäbe vorgesehene metallene Rundstäbe (23) oder Rohre.

17. Träger nach mindestens einem der Ansprüche 1 bis 16,
**gekennzeichnet durch**
zweiteilig mit ihren Endstreifen zusammengefügte Hutprofile (25, 26).

18. Träger nach mindestens einem der Ansprüche 1 bis 17,
**gekennzeichnet durch**
eine ihn mindestens bereichsweise abdeckende Oberflächenbechichtung aus hochtemperaturfesten Stoffen geringer chemischer Affinität.
